# EUROPEAN PATENT SPECIFICATION

(11) **EP 0 570 580 B1**
(45) Date of publication and mention of the grant of the patent: **07.05.1997**
(21) Application number: 93906326.9
(22) Date of filing: 24.09.1992
(51) Int. Cl.: A21D 8/02

(54) **A METHOD AND A DOUGH FOR PRODUCTION OF LAMINATED/SHEETED YEAST-BASED BAKERY PRODUCTS**
METHODE UND TEIG ZUR HERSTELLUNG VON LAMELLENARTIG/GESCHICHTETEN BÄKEREIPRODUKTEN AUF HEFEBASIS
PROCEDE ET PATE SERVANT A LA FABRICATION DE PRODUITS DE BOULANGERIE FEUILLETES A BASE DE LEVURE

(30) Priority: 04.10.1991 SE 9102885
(43) Date of publication of application: 24.11.1993
(73) Proprietor: GE-HA BAGERIET AB, 135 48 Tyresö (SE)
(72) Inventor: GE-HA BAGERIET AB, 135 48 Tyresö (SE)
(74) Representative: Wärulf, Olov
(86) International application number: SE9200658
(87) International publication number: WO9306732

(56) References cited:
- EP-A- 0 384 539
- DE-B- 1 642 566
- US-A- 3 429 712

## Description

### TECHNICAL FIELD

The present invention concerns a method and a dough for production of laminatedlsheeted yeast-based bakery products, e.g. Danish pastries, from a base dough ready to bake, at which a pre-dough is prepared and mixed into the base dough, at which the base dough contains water, yeast, flour and additives, e.g. sugar, salt, fat or oil, after which the mixed base dough is worked (kneaded), rolled and laminated/sheeted in dough layers separated by layers of fat, and eventually formed and filled with fillings.

### BACKGROUND ART

The invention is based on a new production process for a base dough containing yeast which is subsequently laminated/sheeted according to the different demands of the respective products to be formed and baked at a later stage. Examples of the different types of dough are:
- Danish pastries.
Croissant and horn pastries.
- Birke pastries.
Sweet coffee dough pastries.

All the above types of dough/pastry have the following production and technological aspects in common:
- A base dough containing yeast is mixed.
- To this base dough fat of animal and/or vegetaria origin is added and/or laminated/sheeted to obtain a product with layers of fat and dough in different quantities.
- The end product is formed and shaped according to individual demands.
- The end product is proofed in a proofer where both temperature and moisture is controlled for a period of 15 - 60 minutes.
- The end product is subsequently baked.

The production process has been automated during the past few years whilst at the same time the production of unproofed frozen doughs have more or less replaced the lengthy process described above. There are three production methods used today for these types of products: -A traditional method, where the products is manufactured every day and baked the same day. (This is the zero quality test for reference). This method is labour intensive and the initial capital investment is not utilised 100 %. This type of production may only take place in approved bakery premises which thus exclude typically bake-off shops. Expensive investment costs in proofers and a large variation in the baking of the end product depending not only on production but even on proofing times and the quality of the proofer.
A production of frozen, unproofed and unbaked products according to the conventional method, but where the amount of yeast and sugar is increased and dough improvers utilised in order to compensate for the deterioration of the yeast performance that takes place during the freezing process. Before baking the product, it is defrosted, tempered to room temperature, proofed for a 20 % longer time than under the first method and then baked. This method demands expensive capital investment for production and even expensive capital for the end user. Not only does the quality of the end product depend on how the production process is taking place, but even more so depending on the defrosting and proofing process by the end user.
- A production of preproofed products, where the product is manufactured according to the traditional method, proofed to between 50 and 100 % of the end volume and then frozen. Baking of the frozen end product can take place without defrosting. This method demands an even higher capital investment with proofing lines. The manufacturing process is even more costlier due to the fact that yeast cells are alive and can cause fermentation in any area that has not been cleaned properly including in and on the machines. The end product is larger than the unproofed product which means that transport and storage costs can be as much as double depending on which percentage of proofing is attained.

By the patent publication DE-B2-1 642 566 a method is known for the production of a dough, which can be frozen and baked without being thawed. A pre-dough is prepared and kept resting. After that this pre-dough is mixed with further ingredients and kept resting, after which a forming and a filling is done. After deep-freezing the product can be baked without thawing. However the pre-dough in this case does not contain yeast and the baked product is not of the same kind as the products made from a dough according to the present invention.

Also the patent publications DE-A-1 642 566 and US-A-3,429,712 deal with pre-doughs for baking.

DE-A-1 642 566, according to which laminated/sheeted bakery products are produced, refers to the pre-dough as being "conventional" without disclosing any particular composition. Futhermore his publication is rather concerned with temperatures and resting periods than with dough compositions. US-A-3,429,712 is concerned with the production of breads whereby the pre-dough (the "sponge") is directly proceeded to ready-dough production after fermentation without resting in cold store or having been deep-frozen in between.

### DESCRIPTION OF THE INVENTION

The present invention concerns a method and a dough for production of laminated/sheeted yeast-based bakery products, e.g. Danish pastries, and a laminated/sheeted product per se, from a base dough ready to bake, wherein a pre-dough is prepared and mixed into the base dough, the base dough being as cold as possible in order to prevent any form of further fermentation from starting and containing water, yeast, flour and additives, e.g. sugar, salt, fat or oil, after which the mixed base dough is worked (kneaded), rolled and laminated/sheeted in dough layers separated by layers of fat, and eventually formed and filled with fillings, after which the ready dough is baked. The method is characterized in that the pre-dough is prepared from water, yeast, sugar, flour and/or scrap-dough and optionally additives and fermented, the pre-dough being of such low temperature when added to the base dough that it does not activate the yeast in the base dough alternatively after resting in a cold store, or after thawing from a frozen condition before mixing into the base-dough.

The dough according to the invention is characterized in that the pre-dough is prepared from water, yeast, sugar, flour and/or scrap-dough and optionally additives and fermented, alternatively after resting in a cold store, or after thawing from a frozen condition before mixing in with the base-dough, after which the ready dough is baked.

Further characterizing features of the invention is mentioned in the description below and in the claims.

The following demands have been put on the new production process and the end product:
- That the product is of a confectioner quality, that is that there is no significant difference between the handmade end product created by the artisan and the end product manufactured by the new process.
- That the end product not only is of a high quality, but even of an even quality resulting in an even baking result.
- That the same raw materials used in the handmade process is used in the new production process and that no chemicals and/or costly raw materials should replace and/or supplement the standard ingredients.
- That the product can be manufactured with existing equipment or standard equipment currently available on the market.
- That the product can be baked directly with standard baking equipment from the cooled or frozen condition without any defrosting and/or proofing process.
- That the different demands on quality, texture and contents set on the same product in different countries or areas can be satisfied with one and the same process.

The new process adheres to the above demands by the existing raw materials in the base dough is used and manipulated in a special way in order to obtain a pre-dough and a base-dough. The existing lamination/sheeting process is changed and/or manipulated in order to obtain an end product which satisfies the demands set by industry in the various countries or areas, and the existing baking process is changed to suit the products characterisitics and according to the specifications set by the end user.

The new production process consists of the following stages:
1. Preparation of a pre-dough with yeast.
2. Mixing of the pre-dough with the ingredients of the base dough.
3. Laminating/sheeting process.
4. Shaping and filling of the end product.
5. Baking or cooling or freezing of the end product.
6. Storage of the end product in case of freezing under stage 5.
7. Baking of the frozen product.

### 1. PREPARATION OF PRE-DOUGH WITH YEAST

The preparation of the pre-dough with yeast effects the following aspects:
- Taste.
- Liquid contents in the base dough.
- The apperance of the end product which means that the pre-dough can be changed in order to obtain a product

which resembles the handmade product as closely as possible.

The process used for the manufacturing of the pre-dough is determined by the hourly production required and the facilities available. The larger the production plant the more pre-dough is required per hour. To manufacture the pre-dough the ingredients are mixed and allowed to ferment for a certain period.
20 minutes fermentation
75 % water
7 % powder yeast
18 % sugar
Temperature: 40 - 45 °C

Ordinary compressed yeast may also be used, but powder yeast tolerates a higher temperature and thus can be activated quicker. To the above mixture scrap dough can be added to reach a fat contents in the base dough of not more than 5 %.
2 hours fermentation
50 % water
49 % flour
1 % sugar
20 grams compressed yeast per kilogram of flour
Dough temperature: 30 - 35 °C

For a process where the pre-dough is manufactured the day before and stored in a cooler, the following recipe is used:
50 % water
48,5 % flour
1,5 % sugar
5 grams compressed yeast per kilogram of flour
Dough temperature 8 °C
Fermentation time 8 - 12 hours

For the typical Scandinavian Danish pastry the following recipe is applicable:

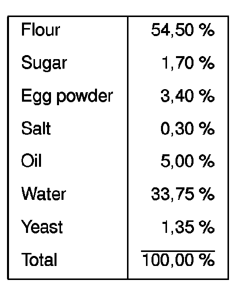

The pre-dough can even be frozen in blocks for usage later in which case the yeast and sugar contents must be increased to a percentage which depends on the period of storage time. A 10 % increase is sufficient for 90 days storage. When freezing blocks, the dough temperature must be kept as cold a possible and the quicker methods is not advisable. The quantity of pre-dough added to the base dough depends entirely on the demands set on the end product with regards to taste, crispiness, general appearance and storage time. The amount varies between 15 % and 50 % in relation to the base dough.

Due to the fact that pastries of the same kind not only in different countries but also in different areas of one and the same country have different characteristics in general appearance and texture, the composition of raw materials can with very slight alterations result in a totally different appearance which suit that particular area. The composition of raw materials in the pre-dough has the same effect on the end product as the raw material composition in the base dough discussed under 2.

Salt is only added to the pre-dough where a high grade of oxidation is required for example in small products. Fat in the pre-dough can be reduced, replaced by a mixture of oil and lecithin or water and lecithin or omitted totally even from the pre-dough, depending which dough structure is required. The size of the product steers this factor directly: the larger the product the less fat in the pre-dough. Powder yeast is used if a process for making the pre-dough is requiring results where time is a limiting factor as powder yeast tolerates a higher temperature. Otherwise compressed yeast is suitable. The amount of yeast is indirectly controlled by several factors: the weaker the flour is, e.g. with a low protein content, the more yeast is to be used. Less yeast may be used during lower production temperatures as the fermentation process can be stopped or slowed down with low temperatures.

The best pre-dough is obtained where pre-dough is made on a continuous basis, much the same as sour dough is made. Tests have shown that new yeast cultures will be created that are more resistant to the drying out process if the same culture is allowed to continue. It is also important to remember that the pre-dough is added for giving taste etc. and that this process must not interfere with the base dough, otherwise the shelf life will be shortened. The pre-dough must be of such a low temperature when added to the base dough that it does not activate the yeast in the base dough. Temperature control is important to obtain the correct acid development.

### 2. MIXING OF THE PRE-DOUGH WITH THE INGREDIENTS OF THE BASE DOUGH

The different qualities and characteristics of the end product determines the configuration of the different raw materials in the base dough. Such raw materials are fat, vegetable or animal or combination on the two with a liquid or solid substance. An improved baking result is obtained with a fat containing 1 % lecithin. With large products such as the croissant, the fat is eliminated or decreased in the base dough and added during lamination/sheeting instead. Liquid fat can be replaced with water plus 1 - 2 % lecithin to obtain a baking result which is greater in volume.

Egg effects the crispiness and colour of the baked product. There is no difference between using fresh eggs or powder eggs. However, only newly broken eggs can be used as the pH-value changes rapidly after breaking of the eggs, resulting in shrinkages during production. As alternative to egg powder milk powder may be use together with lecithin. For larger products no eggs are used to prevent the product from darkening too fast during the baking process which in turn means that the product has not been baked thoroughly before the outside seems finished baked. Eggs can also be replaced 100 % by a mixture of water, oil and lecithin or water and lecithin or oil and 1 - 2 % lecithin, depending on what type of end result is demanded. Lecithin is difficult to mix with water and has to be mixed at high speed in advance.

Either powder yeast or compressed yeast can be used. If a very strong development in taste is required, the percentage of yeast must be increased by 10 - 15 %. Where longer storage periods are required the yeast contents must be increased by 20 - 30 %. The yeast is very sensitive once activated by sugar and the activation of yeast in the base dough must be minimised if the end product is to be frozen.

A flour with a relative high protein content with an even quality is needed. The best results with minimum shrinkage are obtained with a strong flour, e.g. a flour with a high protein content, that has a protein content of 11,0 - 12,5 % (15 % water content). In the event of a long storage a fine texture is one of the demands which can be obtained with a strong flour. As a part of the glutenthreads are destroyed during the freezing process, extra gluten must be added when a weak flour, e.g. a flour with a low protein content, is used.

Sugar is responsible both for the taste and speed of the production process. A good result is obtained with a normal trade sugar, but a definite improvement is obtained when dextrose is used to replace the sugar or alternatively if a part of the sugar contents is replaced with an enzymatic malt. It is also beneficial to add the sugar after half the mixing time has elapsed in order to prevent the yeast cells from being activated.

Milkpowder has no significant influence on the final baking result other than a cosmetic effect. Yeast contains no ensymes that break down the lactose and it is often only the emulsifier in the milkpowder that actually improves the baking effect. When using a weak flour, the ascorbic acid levels can be doubled to give a better baking result.

Water has the same effect as yeast as it vaporises during the baking process. An 5 % increase in the water contents by for example replacing the fat in the base dough with water will give a bigger percentage volume increase. Temperatures can be lowered by adding a mixture of water and shredded ice.

It should be to observe that the pre-dough must always be added to the raw materials of the base dough and then mixed to reduce mixing times. The base dough must be as cold as possible to prevent any form of further fermentation from starting. The yeast when subjected to freezing will dehydrate to a certain extent. The moist contents decreases in the liquid surrounding the yeast cells when the water crystals become ice crystals and even mixing times are to be kept to the absolute minimum in order to prevent heat development.

A significant variation in the baking result can be obtained with different mixing times. A slow mixing time at the end of the mixing period is of greater significance when using a low protein flour (10,5 %) than when using a high protein flour (12,5 %). A total mixing time of 6 minutes on a normal spiral mixer is optimal. For mixing a very flaky or crispy dough, the mixing time is reduced to 4 minutes. When using a dough extruder during industrial production, mixing times can be reduced by 10 - 20 % depending on what type of extruder is used as a part of the mixing process occurs in the extruder. This depends also very much on whether a constant dough supply is fed to the extruder. There is no significant difference between a 2, 3 or 5 roll extruder.

The dough temperature must be kept as low as possible with the help of cold water and raw materials and even with ice. A constant production temperature of 8 ⁰ C prevents the proofing process from commencing and the storage time being decreased. A low dough temperature even reduces the resting times between lamination/sheeting significantly.

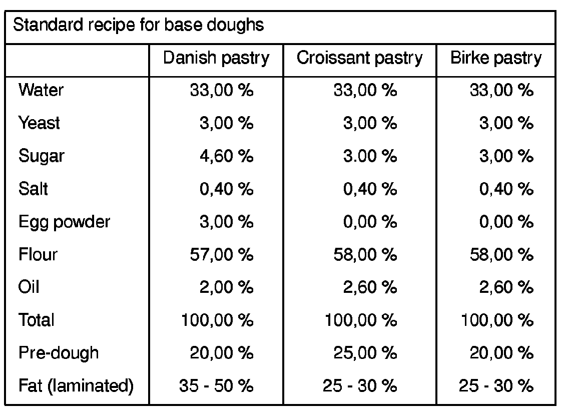

### 3. LAMINATING/SHEETING PROCESS

Both animal fat (butter) or vegetable fat or a mixture of both can be used in the lamination/sheeting process at temperatures recommended by the manufacturer. A high percentage of solid fats gives a better baking result as it has a better emulsion stability, but the taste will be effected negatively if the melting point is too high. Heavier products with a large circumferance complicates the baking products and it is better to remove the fat from the base dough and add this to the lamination process. Fats with a higher water contents than 20 % if available is of advantage.

The amount of layers is determined by the characteristics of the end product. An increase of 20 - 30 % in the amount of layers is demanded in the production process. The higher the total fat percentage in the product the more layers are required. The finer the texture, the more layers are demanded with a high fat content product and vica versa. The amount of layers is naturally also effected by the raw material quality, e.g. the strength of the flour used. For a Danish pastry of the Scandinavian type which has a large fat contents the amount of layers are increased from 27 to 36. For a French croissant with a lower fat contents than Danish pastry the amount of layers are increased from 16 to 24 layers.

### 4. SHAPING AND FILLING OF THE END PRODUCT

There is no change in the shaping and filling process, thicknesses etc. when using the new method to that of the traditional method. With heavy products it is advantageous, though, to increase the size by 10 % and thus one is able to reduce the thickness which improves baking times.

### 5. BAKING OR COOLING OR FREEZING OF THE END PRODUCT

Directly after shaping and filling the product to its final form one fo the following three processes can follow:
- The product can be baked directly at a developing temperature which is 20 % lower than normal and a baking time which is 15 - 20 % longer than normal.
- The product can be cooled down to 4,0 °C and stored at this temperature for a period of up to 24 hours and baked in the same way as in the first one.
- The product can be frozen for baking at a later stage. Because of a high water and fat contents the ice crystals in the yeast cells will "explode" if the freezing is too fast or at too low temperature. This damages the gluten contents which results in a deteriorated baking result. For industrial freezing the minimum freezing temperature is -28 °C.

### 6. STORAGE OF THE END PRODUCT IN CASE OF FREEZING UNDER STAGE 5

The frozen product, packed in airtight bags to prevent drying out and kept at a stable temperature between -18 °C and -22 °C can be stored for a period of 9 months. Large variations in storage temperatures result in the product being dehydrated and results in a deterioration of the baking quality.

### 7. BAKING OF THE FROZEN PRODUCT

It is extremely difficult to specify oven temperatures and/or baking times as research has shown that ovens differ not only from the one manufacturer type to the other, but even within the same manufacturer. To reach a nucleus temperature of 96 °C (the temperature when dough products are baked) without the frozen product being too dark in colour, the following rules are applicable:
- During the beginning of the baking process a very short dosage of vapour can be given when the product does not have a fat contents which is too high e.g. Scandinavian Danish pastry. This must be done while the extractor opening is in the open position in order to prevent the dough from becoming soggy afterwards.
- The larger the product is the larger the decrease in oven temperature and the higher the increase in baking times will be. A reduction by 20 - 30 % in baking temperature and a pro-rata increase in baking time can be expected.

## Claims

1. A method for production of laminated/sheeted yeast-based bakery products, e.g. Danish pastries, from a base dough ready to bake, wherein a pre-dough is prepared and mixed into the base dough, the base dough being as cold as possible in order to prevent any form of further fermentation from starting and containing water, yeast, flour and additives, e.g. sugar, salt, fat or oil, after which the mixed base dough is worked (kneaded), rolled and laminated/sheeted in dough layers separated by layers of fat, and eventually formed and filled with fillings, after which the ready dough is baked, characterized in that the pre-dough is prepared from water, yeast, sugar, flour and/or scrap-dough and optionally additives and fermented, the pre-dough being of such low temperature when added to the base dough that it does not activate the yeast in the base dough alternatively after resting in a cold store, or after thawing from a frozen condition before mixing into the base-dough.

2. A method according to claim 1, characterized in that the base-dough is worked (kneaded) in 3 to 20 minutes, preferably in 3 to 6 minutes, and that the pre-dough and/or the base-dough is produced from cold raw materials and water with a temperature of 0 to 8 °C, preferably 2 to 6 °C.

3. A method according to any of the claims 1-2, characterized in that the layers are increased in a high fat content product from normally 24 layers up to maximum 36 layers, that the layers are reduced in a low fat content product from normally 24 layers down to minimum 16 layers in order to obtain a product which resembles a hand-made confectionery product.

4. A method according to any of the claims 1-3, characterized in that the mixed and worked dough is baked directly after the forming or after storing in a cold store at a temperature of 4 to 8 °C in maximum 24 hours or after storing in a frozen condition at a temperature of -15 to -20 °C, preferably -18 °C in maximum 12 months at a baking temperature which is about 20 % lower than a normal baking temperature, and for about 20 % longer time, preferably 15 to 20 minutes.

5. A dough for production of laminated/sheeted yeast-based bakery products, e.g. Danish pastries, from a base dough ready to bake, wherein a pre-dough is prepared and mixed into the base dough, the base dough containing water, yeast, flour and additives, e.g. sugar, salt, fat or oil, characterized in that the pre-dough contains water, yeast, sugar, flour and/or scrap-dough and optionally additives.

6. A dough according to claim 5, characterized in that the pre-dough contains 40 to 80 %, preferably 75 % (by weight) of water, 4 to 9 %, preferably 7 % (by weight) of powder yeast and sugar and optionally scrap-dough and is designed for fermentation in 10 to 30 minutes, preferably 20 minutes, and at a dough temperature of 34 to 55 °C, preferably 40 to 50 °C.

7. A dough according to claim 5, characterized in that the pre-dough contains 35 to 60 %, preferably 50 % (by weight) of water, 40 to 60 %, preferably 50 % (by weight) of flour and 15 to 50 gram, preferably 20 gram of yeast per kilogram flour and is designed for fermentation in 0,5 to 4 hours, preferably 2 hours at a dough temperature of 20 to 35 °C, preferably 25 to 30 °C.

8. A dough according to claim 5, characterized in that the pre-dough contains 35 to 60 %, preferably 50 % (by weight) of water, 40 to 60 %, preferably 50 % (by weight) of flour and 5 to 50 gram, preferably 5 gram of yeast per kilogram flour and is designed for storing in 8 to 12 hours at a dough temperature of 4 to 12 °C, preferably 8 to 10 °C.

9. A dough according to claim 5, designed for a production of Danish pastries, characteried in that the pre-dough contains the following ingredients by wheight:

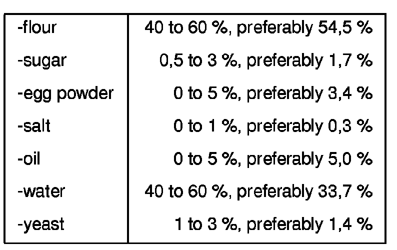

10. Laminated/sheeted yeast-based bakery products, e.g. Danish pastries, produced from a base dough ready to bake, wherein a pre-dough is prepared and mixed into the base dough, the base dough containing water, yeast, flour and additives, e.g. sugar, salt, fat or oil, after which the mixed base dough is worked (kneaded), rolled and laminated/sheeted in dough layers separated by layers of fat, formed into dough pieces and filled with fillings, after which the dough pieces are baked, characterized in that the pre-dough is prepared from water, yeast, sugar, flour and/or scrap-dough and optionally additives and fermented, alternatively after resting in a cold store, or after thawing from a frozen condition before mixing into the base-dough, that the dough pieces eventually are stored, preferably in a cold store or in a frozen condition.

## Patentansprüche

1. Verfahren zur Herstellung von lamellierten/geschichteten Backwaren aus Hefeteig, z.B. Plundergebäck, aus einem backfertigen Grundteig, worin ein Vorteig bereitet und unter den Grundteig gemischt wird, wobei der Grundteig so kalt wie möglich ist um jedes weitere Aufgehen zu verhindern, und Wasser, Hefe, Mehl sowie Zutaten, z.B. Zucker, Salz, Fett oder Öl, enthält, wonach der gemischte Grundteig geknetet, ausgerollt und in durch Schichten aus Fett voneinander getrennte Teigschichten lamelliert/geschichtet und schliesslich geformt und mit Füllungen gefüllt wird, wonach der fertige Teig gebacken wird, dadurch gekennzeichnet, dass der Vorteig aus Wasser, Hefe, Zucker, Mehl und/oder Restteig und Zutaten nach Wunsch bereitet wird und aufgeht, wobei der Vorteig, wenn er dem Grundteig zugefügt wird, eine so niedrige Temperatur hat, dass er die Hefe im Grundteig nicht aktiviert, beziehungsweise dass er, bevor er in den Grundteig gemischt wird, in einem Kühlraum geruht hat oder aus gefrorenem Zustand aufgetaut ist.

2. Verfahren nach Anspruch 1, dadurch gekennzeichnet, dass der Grundteig 3 bis 20 Minuten, vorzugsweise 3 bis 6 Minuten, geknetet wird und dass der Vorteig und/oder der Grundteig aus kalten Zutaten und Wasser mit einer Temperatur von 0 bis 8°C, vorzugsweise 2 bis 6°C, hergestellt wird.

3. Verfahren nach einem der Ansprüche 1-2, dadurch gekennzeichnet, dass die Schichten eines Produktes mit hohem Fettgehalt von normalerweise 24 Schichten auf ein Maximum von 36 Schichten vermehrt werden, dass die Schichten in einem Produkt mit niedrigem Fettgehalt von normalerweise 24 Schichten auf ein Minimum von 16 Schichten vermindert werden, um ein Produkt zu erhalten, welches einer handgemachten Konditorware entspricht.

4. Verfahren nach einem der Ansprüche 1-3, dadurch gekennzeichnet, dass der gemischte und geknetete Teig unmittelbar nach dem Formen oder nach dem Aufbewahren in einem Kühlraum bei einer Temperatur von 4 bis 8°C innerhalb von höchstens 24 Stunden oder nach dem Lagern in gefrorenem Zustand bei einer Temperatur von -15 bis -20°C, vorzugsweise -18°C, innerhalb von höchstens 12 Monaten bei einer Backtemperatur, welche etwa 20% niedriger ist als eine übliche Backtemperatur und etwa 20% länger, vorzugsweise 15 bis 20 Minuten, gebacken wird.

5. Ein Teig zur Herstellung von lamellierten/geschichteten Backwaren aus Hefeteig, z.B. Plundergebäck, aus einem backfertigen Grundteig, worin ein Vorteig bereitet und unter den Grundteig gemischt wird, wobei der Grundteig Wasser, Hefe, Mehl und Zutaten, z.B. Zucker, Salz, Fett oder Öl, enthält, dadurch gekennzeichnet, dass der Vorteig Wasser, Hefe, Zucker, Mehl und/oder Restteig und Zutaten nach Wunsch enthält.

6. Ein Teig nach Anspruch 5, dadurch gekennzeichnet, dass der Vorteig 40 bis 80%, vorzugsweise 75% (Gewichtsprozent) Wasser, 4 bis 9%, vorzugsweise 7% (Gewichtsprozent) Trockenhefe und Zucker und Restteig nach Wunsch enthält und zum Aufgehen für die Dauer von 10 bis 30 Minuten, vorzugsweise 20 Minuten, und bei einer Teigtemperatur von 34 bis 55°C, vorzugsweise 40 bis 50°C, entwickelt ist.

7. Ein Teig nach Anspruch 5, dadurch gekennzeichnet, dass der Vorteig 35 bis60%, vorzugsweise 50% (Gewichtsprozent) Wasser, 40 bis 60 %, vorzugsweise 50% (Gewichtsprozent) Mehl und 15 bis 50 Gramm, vorzugsweise 20 Gramm Hefe pro Kilogramm Mehl enthält und zum Aufgehen für die Dauer von 0,5 bis 4 Stunden, vorzugsweise 2 Stunden. bei einer Teigtemperatur von 20 bis 35°C, vorzugsweise 25 bis 30°C, entwickelt ist.

8. Ein Teig nach Anspruch 5, dadurch gekennzeichnet, dass der Vorteig 35 bis 60%, vorzugsweise 50% (Gewichtsprozent) Wasser, 40 bis 60%, vorzugsweise 50% (Gewichtsprozent) Mehl und 5 bis 50 Gramm, vorzugsweise 5 Gramm Hefe pro Kilogramm Mehl, enthält und fürs Aufbewahren für die Dauer von 8 bis 12 Stunden bei einer Teigtemperatur von 4 bis 12°C, vorzugsweise 8 bis 10°C, entwickelt ist.

9. Ein Teig nach Anspruch 5, entwickelt für eine Produktion von Plunderteig, dadurch gekennzeichnet, dass der Vorteig die folgenden Zutaten nach Gewicht enthält:

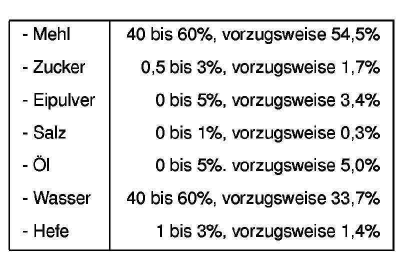

10. Lamellierte/geschichtete Backwaren aus Hefeteig, z.B. Plundergebäck, hergestellt aus einem backfertigen Grundteig, worin ein Vorteig bereitet und unter den Grundteig gemischt wird, wobei der Grundteig Wasser, Hefe, Mehl und Zutaten, z.B. Zucker, Salz, Fett oder Öl enthält, wonach der gemischte Grundteig geknetet, ausgerollt und in durch Schichten aus Fett voneinander getrennte Teigschichten lamelliert/ geschichtet, zu Teigstücken geformt und mit Füllungen gefüllt wird, wonach die Teigstücke gebacken werden, dadurch gekennzeichnet, dass der Vorteig aus Wasser, Hefe, Zucker, Mehl und/oder Restteig und Zutaten nach Wunsch bereitet wurde und aufgeht, beziehungsweise dass der Vorteig, bevor er unter den Grundteig gemischt wird, in einem Kühlraum geruht hat oder aus gefrorenem Zustand aufgetaut ist, dass die Teigstücke schliesslich gelagert werden, vorzugsweise in einem Kühlraum oder in gefrorenem Zustand.

## Revendications

1. Une méthode de production de produits de boulangerie laminés/feuilletés à base de levure, par ex: des feuilletés danois, d'une pâte de base prête-à cuire, dans laquelle une pâte-mère est mélangée à la pâte de base, celle-ci étant aussi froide que possible afin de prévenir chaque forme additionelle de fermentation et contenant de l'eau, de la levure, de la farine et des additifs, par ex. du sucre, du sel, de la grasse ou de l'huile, la pâte de base étant en suite travaillée (pétrie), roulée et laminée/feuilletée en couches de pâte séparées par des couches de grasse, et éventuellement formée et farcie, après quoi la pâte prête est cuite, carac-térisée en ce que la pâte-mère est préparée d'eau, de levure, de sucre, de farine et/ou de restants de pâtes et éventuellement d'additifs et fermentée, la pâte-mère ayant une température si basse lorsqu'elle est ajoutée à la pâte de base qu'elle ne risque pas d'activer la levure dans la pâte de base ou bien après une période de repos au froid, ou bien après dégèlement d'une condition congelée avant d'être mélangée à la pâte de base.

2. Une méthode suivant la revendication 1, caractérisée en ce que la pâte de base est travaillée (pétrie) pendant 3 à 20 minutes, de préférence pendant 3 à 6 minutes, et que la pâte-mère et/ou la pâte de base est produite de matières premières froides et d'eau froide d'une température de 0 à 8 °C, de préférance de 2 à 6 °C.

3. Une méthode suivant l'une quelconque des revendications 1-2 caractérisée en ce que le nombre de couches augmente dans un produit plus gras de 24 à un maximum de 36 couches, et que le nombre de couches diminue dans un produit moins gras de normalement 24 couches à un minimum de 16 couches dans le but d'obtenir un produit ressemblant aux produits de confection faits à la main.

4. Une méthode suivant l'une quelconque des revendications 1-3, caractérisée en ce que la pâte mélangée et travaillée est cuite immédiatement après avoir été formée ou après avoir été préservée au froid dans une température de 4 à 8 °C pendant un maximum de 24 heures ou après avoir été préservée au congélateur à une température de -15 à -20 °C, de préférance à -18 °C pendant un maximum de 12 mois à une température de cuisson qui est environ 20% sous la température de cuisson normale, en augmentant la période de cuisson d'environ 20% de préférance 15 à 20 minutes.

5. Une pâte pour la production de produits de boulangerie laminés/feuilletés à base de levure, par. ex: les feuilletés danois, d'une pâte de base prête à cuire, dans laquelle une pâte-mère est préparée et melangée dans la pâte de base, celle-ci contenant de l'eau, de la levure, de la farine et des additifs, par ex::du sucre, du sel, de la graisse ou de l'huile, caractérisée en ce que la pâte-mère contient de l'eau, de la levure, du sucre, de la farine et/ou des restants de pâtes et eventuellement des additifs.

6. Une pâte suivant la revendication 5, caractérisée en ce que la pâte-mère contient 40 à 80%, de préférance 75% (pourcentage en poids) d'eau, 4 à 9%, de préférance 7% (pourcentage en poids) de levure en poudre et de sucre et eventuellement des restants de pâtes et est conçue à lever en 10 à 30 minutes, de préférance en 20 minutes, et à une température de la pâte de 34 à 55 °C, de préférance de 40 à 50 °C

7. Une pâte suivant la revendication 5, caractérisée en ce que la pâte-mère contient 35 à 60 %, de préférance 50% (pourcentage en poids) d'eau, 40 à 60 %, de préférance 50% (pourcentage en poids) de farine et 15 à 50 grammes, de préférance 20 grammes de levure par kilo de farine et est conçue à fermenter en 0,5 à 4 heures de préférance 2 heures à une température de la pâte de 20 à 35 °C, de préférance 25 à 30 °C.

8. Une pâte suivant la revendication 5, caractérisée en ce que la pâte-mère contient 35 à 60%, de préférance 50% (pourcentage en poids) d'eau, 40 à 60%, de préférance 50% (pourcentage en poids) de farine et 5 à 50 grammes, de préférance 5 grammes de levure par kilo de farine et est conçue pour être préservée durant 8 à 12 heures à une température de la pâte de 4 à 12 °C de préférance 8 à 10 °C.

9. Une pâte suivant la revendication 5, conçue pour la production de feuilletés Danois, caractérisée en ce que la pâte-mère contient les produits suivant en pourcentage en poids:

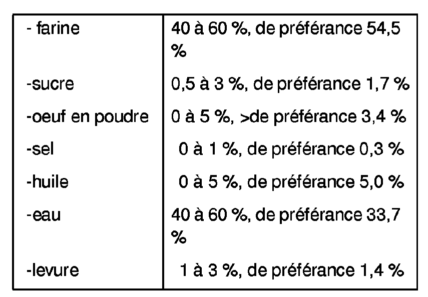

10. Des produits de boulangerie à base de levure laminés/feuilletés, par ex: des feuilletés Danois, produits d'une pâte de base prête à cuire, dans laquelle une pâte-mère est préparée et melangée dans la pâte de base, celle-ci contenant de l'eau, de la levure, de la farine et additifs, par ex: du sucre, du sel, de la graisse ou de l'huile, après quoi la pâte de base mélangée est travaillée (pétrie), roulée et laminée/feuilletée en couches de pâte séparées par des couches de graisse, formée en plaques de pâte et farce de farces, après quoi les plaques de pâtes sont cuites, caractérisées en ce que la pâte-mère consiste d'eau, de levure, de sucre, de farine et/ou de restants de pâtes et eventuellement d'additifs et est levée, alternativement après repos au froid, ou après dégèlement d'une condition congelée avant d'être mélangée à la pâte de base, que les plaques de pâtes sont éventuellement préservées au froid, de préférance congelées.
